# EUROPEAN PATENT SPECIFICATION

(11) **EP 3 037 502 B1**
(45) Date of publication and mention of the grant of the patent: **16.10.2019**
(21) Application number: 14837712.0
(22) Date of filing: 18.07.2014
(51) Int. Cl.: C09K 21/12, C08K 3/26, C08K 3/32, C08K 5/3477, C08L 101/00, C09K 21/02, C08K 5/3462

(54) **FLAME-RETARDANT COMPOSITION AND FLAME-RETARDANT SYNTHETIC RESIN COMPOSITION**
FLAMMHEMMENDE ZUSAMMENSETZUNG UND FLAMMHEMMENDE KUNSTHARZZUSAMMENSETZUNG
COMPOSITION IGNIFUGE ET COMPOSITION DE RÉSINE SYNTHÉTIQUE IGNIFUGE

(30) Priority: 21.08.2013 JP 2013171458
(43) Date of publication of application: 29.06.2016
(73) Proprietor: Adeka Corporation, Tokyo 116-8554 (JP)
(72) Inventor: KAMIMOTO, Tetsuo, Saitama-shi Saitama 336-0022 (JP); YONEZAWA, Yutaka, Saitama-shi Saitama 336-0022 (JP); NAKAMURA, Michio, Saitama-shi Saitama 336-0022 (JP); OKAMOTO, Yuri, Saitama-shi Saitama 336-0022 (JP); OMORI, Kohei, Saitama-shi Saitama 336-0022 (JP)
(74) Representative: Forstmeyer, Dietmar
(86) International application number: PCT/JP2014/069172
(87) International publication number: WO 2015/025658

(56) References cited:
- EP-A1- 2 716 734
- EP-A1- 2 789 653
- WO-A1-2012/161070
- WO-A1-2013/084725
- JP-A- H0 680 829
- JP-A- H05 214 176
- JP-A- 2009 120 717
- JP-B2- 4 962 662
- KR-A- 20120 079 302
- US-A1- 2007 176 154
- US-A1- 2010 249 286

## Description

### Technical Field

The present invention relates to a method of preparing a flame-retardant synthetic resin composition.

### Background Art

Synthetic resins have conventionally been widely used, for example, for construction materials, automobile parts, packaging materials, agricultural materials, housing materials for home appliances, and toys because of their excellent chemical and mechanical characteristics. Unfortunately, many synthetic resins are flammable and thus need flame-proofing for some applications. A widely known flame-proofing method is to use one or a combination of flame retardants, such as halogen-based flame retardants, inorganic phosphorus-based flame retardants typified by red phosphorus and polyphosphate-based flame retardants such as ammonium polyphosphate, organophosphorus-based flame retardants typified by triaryl phosphate ester compounds, metal hydroxides, and antimony oxide and melamine compounds which are flame retardant assistants.

Halogen-based flame retardants, however, have a drawback in that they generate hazardous gases on combustion. Thus, attempts are being made to use the aforementioned phosphorus-based flame retardants that do not involve this problem.

For example, Patent Literature 1 discloses a flame-retardant synthetic resin composition including ammonium polyphosphate, a multivalent hydroxyl group-containing compound, a triazine ring-containing compound, and a metal hydroxide. Patent Literatures 2 and 3 disclose flame-retardant synthetic resin compositions including melamine polyphosphate and (penta to tripenta) erythritol. Patent Literature 4 discloses a flame-retardant synthetic resin composition including polybutylene terephthalate (PBT), melamine pyrophosphate, and an aromatic phosphate oligomer. Patent Literatures 5 and 6 describe that melamine pyrophosphate and other phosphorus-containing compounds are effective in the flame-proofing of polymers such as PBT.

Among such flame retardants, intumescent flame retardants--i.e., flame retardants that include a polyphosphate salt as a main component and that form a surface-swelling (intumescent) layer on combustion, thus achieving flame retardancy by preventing the diffusion of decomposition products and the transfer of heat--are known to have excellent flame retardancy. For example, Patent Literature 7 discloses such a flame retardant.

### Citation List

### Patent Literature

Patent Literature 1: JP 8-176343 A
Patent Literature 2: US Patent No. 3936416
Patent Literature 3: US Patent No. 4010137
Patent Literature 4: US Patent No. 5814690
Patent Literature 5: US Patent No. 4278591
Patent Literature 6: US Patent No. 5618865
Patent Literature 7: US 2003088000 (A1)

### Summary of Invention

### Technical Problem

Unfortunately, polyphosphate salts--i.e., the main component of the aforementioned intumescent flame retardant--tend to produce strongly acidic salts due to e.g. side reactions at the time of production by heating and condensation. If a polyphosphate salt is used as a material for a flame retardant, the flame retardant may have poor heat resistance due to its acidity, or the flame retardant may corrode processing machines at the time of compounding resins. Also, if the flame retardant is blended to a synthetic resin and made into a flame-retardant synthetic resin composition, the flame retardant may affect the weather resistance of the synthetic resin composition.

Thus, an objective of the invention is to provide a flame retardant composition that has excellent heat resistance and in which the risk of corroding processing machines at the time of compounding resin is reduced, and to provide a flame-retardant synthetic resin composition that includes this flame retardant composition and that has excellent heat resistance and weather resistance. Also provided is a flame-retardant weather-resistant shaped product that is obtained from the aforementioned flame-retardant synthetic resin composition.

### Solution to Problem

In order to accomplish the above object, the present inventors have intensively studied, and have completed the invention.

The invention provides a method of preparing a flame-retardant synthetic resin composition as defined in the claims.

### Advantageous Effects of Invention

According to the present invention, it is possible to provide a flame retardant composition that has excellent heat resistance and in which the risk of corroding processing machines at the time of compounding resin is reduced. Also according to the present invention, it is possible to provide a synthetic resin composition that has excellent flame retardancy and weather resistance. Also, according to the present invention, it is possible to provide a shaped product having flame retardancy and weather resistance.

### Description of Embodiments

The melamine salt used as component (A) in the flame retardant composition of the present invention is selected from melamine orthophosphate, melamine pyrophosphate, and melamine polyphosphate; the salt may be used singly or may be used as a mixture. Among the above, melamine pyrophosphate is preferred from the viewpoint of heat resistance, weather resistance, and the low risk of corroding processing machines. In cases of using a mixture, the higher the content rate of melamine pyrophosphate, the more preferable.

The aforementioned salts of the phosphoric acids and melamine can be obtained by reacting melamine with the corresponding phosphoric acid or phosphate. However, the melamine salt used as component (A) in the present invention is preferably melamine pyrophosphate or melamine polyphosphate obtained by subjecting melamine orthophosphate to heating and condensation, with melamine pyrophosphate being particularly preferable.

The melamine pyrophosphate may include unreacted melamine orthophosphate, melamine polyphosphate produced by excessive reaction, or other by-products.

In the heating condensation reaction of melamine orthophosphate, melamine pyrophosphate or melamine polyphosphate may be produced by heating melamine orthophosphate and subjecting the same to a dehydrative condensation reaction.

It is preferable to conduct the heating condensation reaction of melamine orthophosphate in a solid-phase state; however, the reaction may be conducted in a molten state or in a slurry state wherein a small amount of water is included. Of course, a solvent may be used for the reaction, but this is not preferable, considering e.g. the time and trouble of removing the solvent.

The melamine pyrophosphate obtained by subjecting melamine orthophosphate to a heating condensation reaction in a solid-phase state may be used as-is without refining.

From the viewpoint of the purity of the obtained melamine pyrophosphate and production efficiency, the temperature for obtaining melamine pyrophosphate by subjecting melamine orthophosphate to a heating condensation reaction in a solid-phase state is preferably from 150°C to 300°C, most preferably from 160 to 280°C. If the temperature is below 150°C, pyrophosphorylation may not progress sufficiently, whereas temperatures above 300°C tend to produce a triphosphate salt or other polyphosphates that have undergone further dehydrative condensation reaction.

The reaction time is not particularly limited; the reaction may be conducted as appropriate depending on temperature conditions until the dehydrative condensation reaction from melamine orthophosphate to melamine pyrophosphate is completed.

The piperazine salt used as component (B) in the flame retardant composition of the invention is selected from piperazine orthophosphate, piperazine pyrophosphate, and piperazine polyphosphate; the salt may be used singly or may be used as a mixture. Among the above, piperazine pyrophosphate is preferred from the viewpoint of heat resistance, weather resistance, and the low risk of corroding processing machines. In cases of using a mixture, the higher the content rate of piperazine pyrophosphate, the more preferable.

The aforementioned salts of the phosphoric acids and piperazine can be obtained by reacting piperazine with the corresponding phosphoric acid or phosphate. However, the piperazine salt used as component (B) in the present invention is preferably piperazine pyrophosphate or piperazine polyphosphate obtained by subjecting piperazine orthophosphate to heating and condensation, with piperazine pyrophosphate being particularly preferable.

The piperazine pyrophosphate may include unreacted piperazine orthophosphate, piperazine polyphosphate produced by excessive reaction, or other by-products.

In the heating condensation reaction of piperazine orthophosphate, piperazine pyrophosphate or piperazine polyphosphate may be produced by heating piperazine orthophosphate and subjecting the same to a dehydrative condensation reaction.

It is preferable to conduct the heating condensation reaction of piperazine orthophosphate in a solid-phase state; however, the reaction may be conducted in a molten state or in a slurry state wherein a small amount of water is included. Of course, a solvent may be used for the reaction, but this is not preferable, considering e.g. the time and trouble of removing the solvent.

The piperazine pyrophosphate obtained by subjecting piperazine orthophosphate to a heating condensation reaction in a solid-phase state may be used as-is without refining.

From the viewpoint of the purity of the obtained piperazine pyrophosphate and production efficiency, the temperature for obtaining piperazine pyrophosphate by subjecting piperazine orthophosphate to a heating condensation reaction in a solid-phase state is preferably from 170°C to 320°C, most preferably from 180 to 300°C. If the temperature is below 170°C, pyrophosphorylation may not progress sufficiently, whereas temperatures above 320°C tend to produce a triphosphate salt or other polyphosphates that have undergone further dehydrative condensation reaction.

The reaction time is not particularly limited; the reaction may be conducted as appropriate depending on temperature conditions until the dehydrative condensation reaction from piperazine orthophosphate to piperazine pyrophosphate is completed.

The contents of component (A) and component (B) in the flame retardant composition of the invention when the total content of component (A) and component (B) is 100 parts by mass are: 20 to 50 parts by mass of component (A); and 50 to 80 parts by mass of component (B).

Next, component (C) of the present invention is described.

In the present invention, a hydrotalcite compound is used as component (C). In the present invention, a hydrotalcite compound refers to a carbonate double salt compound of aluminum and magnesium and/or zinc. The hydrotalcite compound may be a naturally-occurring product or a synthetic product. Examples of methods for synthesizing such synthetic products include known methods disclosed, for example, in JP-B-46-2280, JP-B-50-30039, JP-B-51-29129, and JP-A-61-174270. In the present invention, various hydrotalcite compounds may be used regardless of crystal structure, crystal grain system, the presence/absence of water of crystallization, the amount thereof, etc.

The hydrotalcite compound may be treated with perchloric acid. Also, it is possible to use a hydrotalcite compound whose surface is covered with, for example, a higher fatty acid such as stearic acid, a higher fatty acid metal salt such as an alkali metal salt of oleic acid, an organic sulfonic acid metal salt such as an alkali metal salt of dodecylbenzenesulfonic acid, a higher fatty acid amide, a higher fatty acid ester, or a wax.

Preferably, the hydrotalcite compound is a compound represented by the following general formula (4).

Mgₓ₁Znₓ₂Al₂(OH)₂₍ₓ₁₊ₓ₂₎₊₄·CO₃·mH₂O ... (4)

(wherein, x1 and x2 each represent a number satisfying the conditions represented by the following expressions, and m represents a real number: 0≤x2/x1<10; and 2≤x1+x2<20.)

Commercially available products may be used for the hydrotalcite compound, with examples including DHT-4 (hydrotalcite; product of Kyowa Chemical Industry Co., Ltd.), DHT-4A (hydrotalcite; product of Kyowa Chemical Industry Co., Ltd.), Magceler 1 (hydrotalcite; product of Kyowa Chemical Industry Co., Ltd.), Alcamizer 1 (hydrotalcite; product of Kyowa Chemical Industry Co., Ltd.), Alcamizer 2 (hydrotalcite; product of Kyowa Chemical Industry Co., Ltd.), Alcamizer 4 (Alcamizer P-93) (zinc-modified hydrotalcite; product of Kyowa Chemical Industry Co., Ltd.), Alcamizer 7 (zinc-modified hydrotalcite; product of Kyowa Chemical Industry Co., Ltd.), and Alcamizer 5 (perchloric acid-treated hydrotalcite; product of Kyowa Chemical Industry Co., Ltd.), wherein DHT-4A (hydrotalcite; product of Kyowa Chemical Industry Co., Ltd.) is particularly preferable.

The content of component (C) in the flame retardant composition of the present invention is from 0.01 to 5 parts by mass with respect to 100 parts by mass in total of component (A) and component (B). From the viewpoint of heat resistance, weather resistance, and the low risk of corroding processing machines, the content in the flame retardant composition of the present invention is preferably from 0.05 to 4 parts by mass, more preferably from 0.1 to 2 parts by mass with respect to 100 parts by mass in total of component (A) and component (B).

The flame retardant composition of the present invention may further include zinc oxide, which serves as a flame retardant assistant. The zinc oxide may be surface-treated. Commercially-available products of zinc oxide may be used, and usable examples include Zinc Oxide Type 1 (product of Mitsui Mining and Smelting Co., Ltd.), partially-coated zinc oxide (product of Mitsui Mining and Smelting Co., Ltd.), Nanofine 50 (ultrafine zinc oxide particles; average particle size: 0.02 µm; product of Sakai Chemical Industry Co., Ltd.), and Nanofine K (ultrafine zinc oxide particles coated with zinc silicate; average particle size: 0.02 µm; product of Sakai Chemical Industry Co., Ltd.).

The content of zinc oxide in the flame retardant composition of the present invention is preferably from 0.5 to 10 parts by mass, more preferably from 1.2 to 5 parts by mass, with respect to 100 parts by mass in total of component (A) and component (B).

Further, the flame retardant composition of the present invention may include an anti-drip agent to prevent dripping at the time of combustion. Examples of anti-drip agents include fluorine-based anti-drip agents, silicone rubbers, and phyllosilicates. Among the above, fluorine-based anti-drip agents are preferred.

Specific examples of fluorine-based anti-drip agents include: fluorine-based resins such as polytetrafluoroethylene, polyvinylidene fluoride, and polyhexafluoropropylene; and alkali metal salt compounds of perfluoroalkane sulfonic acids or alkaline-earth metal salts of perfluoroalkane sulfonic acids, such as perfluoromethane sulfonic acid sodium salt, perfluoro-n-butane sulfonic acid potassium salt, perfluoro-t-butane sulfonic acid potassium salt, perfluorooctane sulfonic acid sodium salt, and perfluoro-2-ethylhexane sulfonic acid calcium salt. Of the above anti-drip agents, polytetrafluoroethylene is most preferred from the viewpoint of drip preventability.

In cases of using a phyllosilicate as the anti-drip agent, examples of useful phyllosilicates include smectite-based clay minerals, such as montmorillonite, saponite, hectorite, beidellite, stevensite, and nontronite; and vermiculite, halloysite, swelling mica, and talc. Organic cations, quaternary ammonium cations, or phosphonium cations may be intercalated between the layers.

The content of the anti-drip agent in the flame retardant composition of the invention with respect to 100 parts by mass in total of component (A) and component (B) is preferably from 0.01 to 5 parts by mass, more preferably from 0.05 to 3 parts by mass, even more preferably from 0.1 to 1 part by mass. If the content of the anti-drip agent is less than 0.01 parts by mass, the drip-preventing effect may not be sufficient, and if the content exceeds 5 parts by mass, the characteristics of the resin may deteriorate.

The flame retardant composition of the present invention may include a silicone oil in order to suppress secondary coagulation at the time of blending and to improve water resistance. Examples of silicone oils include: dimethyl silicone oils in which the side chains and terminals of a polysiloxane are all methyl groups; methylphenyl silicone oils in which some of the side chains of a polysiloxane include phenyl groups; methyl hydrogen silicone oils in which some of the side chains of a polysiloxane include hydrogen; and copolymers of the above. It is also possible to use modified silicone oils--such as amine-modified, epoxy-modified, alicyclic epoxy-modified, carboxyl-modified, carbinol-modified, mercapto-modified, polyether-modified, long-chain alkyl-modified, fluoroalkyl-modified, higher fatty acid ester-modified, higher fatty acid amide-modified, silanol-modified, diol-modified, phenol-modified, and/or aralkyl-modified silicone oils--in which organic groups are introduced into some of the side chains and/or terminals.

Specific examples of the silicone oil are listed below. Examples of dimethyl silicone oils include KF-96 (product of Shin-Etsu Chemical Co., Ltd.), KF-965 (product of Shin-Etsu Chemical Co., Ltd.), and KF-968 (product of Shin-Etsu Chemical Co., Ltd.). Examples of methyl hydrogen silicone oils or silicone oils having a methyl hydrogen polysiloxane structure include KF-99 (product of Shin-Etsu Chemical Co., Ltd.), KF-9901 (product of Shin-Etsu Chemical Co., Ltd.), HMS-151 (product of Gelest Inc.), HMS-071 (product of Gelest Inc.), HMS-301 (product of Gelest Inc.), and DMS-H21 (product of Gelest Inc.). Examples of methylphenyl silicone oils include KF-50 (product of Shin-Etsu Chemical Co., Ltd.), KF-53 (product of Shin-Etsu Chemical Co., Ltd.), KF-54 (product of Shin-Etsu Chemical Co., Ltd.), and KF-56 (product of Shin-Etsu Chemical Co., Ltd.). Examples of epoxy-modified products include X-22-343 (product of Shin-Etsu Chemical Co., Ltd.), X-22-2000 (product of Shin-Etsu Chemical Co., Ltd.), KF-101 (product of Shin-Etsu Chemical Co., Ltd.), KF-102 (product of Shin-Etsu Chemical Co., Ltd.), and KF-1001 (product of Shin-Etsu Chemical Co., Ltd.). An example of a carboxyl-modified product includes X-22-3701E (product of Shin-Etsu Chemical Co., Ltd.). Examples of carbinol-modified products include X-22-4039 (product of Shin-Etsu Chemical Co., Ltd.) and X-22-4015 (product of Shin-Etsu Chemical Co., Ltd.). An example of an amine-modified product includes KF-393 (product of Shin-Etsu Chemical Co., Ltd.).

The flame retardant composition of the invention may include a silane coupling agent. A silane coupling agent is a compound that includes an organic functional group and a hydrolytic group, and is represented, for example, by the general formula A-(CH₂)ₖ-Si(OR)₃, wherein A represents an organic functional group, k represents a number from 1 to 3, and R represents a methyl group or an ethyl group. Examples of the organic group A include an epoxy group, a vinyl group, a methacrylic group, an amino group, and a mercapto group. A silane coupling agent including an epoxy group is particularly preferable for the silane coupling agent used in the present invention.

It is also preferable that the flame retardant composition of the invention includes a slip additive as necessary. Examples of slip additives include: purely hydrocarbon-based slip additives, such as liquid paraffin, natural paraffin, microwax, synthetic paraffin, low molecular-weight polyethylene, and polyethylene wax; halogenated hydrocarbon-based slip additives; fatty acid-based slip additives, such as higher fatty acid and oxyfatty acids; fatty acid amide-based slip additives, such as fatty acid amides and bis-fatty acid amides; ester-type slip additives, such as lower alcohol esters of fatty acids, polyol esters of fatty acids such as glyceride, polyglycol esters of fatty acids, and fatty alcohol esters of fatty acids (ester waxes); metal soap, fatty alcohols, polyols, polyglycols, polyglycerols, partial esters of fatty acids and polyols, partial ester slip additives of fatty acids and polyglycols or polyglycerols, (meth)acrylic ester-based copolymers, silicone oils, and mineral oils.

It is also preferable that the flame retardant composition of the invention includes a polyol compound as a flame retardant assistant. A polyol compound is a compound in which a plurality of hydroxyl groups are bonded, and examples include pentaerythritol, dipentaerythritol, tripentaerythritol, polypentaerythritol, neopentyl glycol, trimethylol propane, ditrimethylol propane, 1,3,5-tris(2-hydroxyethyl)isocyanurate, polyethylene glycol, glycerol, diglycerol, mannitol, maltitol, lactitol, sorbitol, erythritol, xylitol, xylose, sucrose, trehalose, inositol, fructose, maltose, and lactose. Of the above polyol compounds, one or more types of compounds selected from the group consisting of pentaerythritol and pentaerythritol condensates--such as pentaerythritol, dipentaerythritol, tripentaerythritol, and polypentaerythritol--are preferred, dipentaerythritol and pentaerythritol condensates are more preferred, and dipentaerythritol is most preferred.

The pentaerythritol condensate may be a mixture of pentaerythritol and various pentaerythritol condensates (in the present invention, this is referred to as a (poly)pentaerythritol mixture). In the (poly)pentaerythritol mixture, if n represents the degree of condensation of pentaerythritol, the total content of pentaerythritol and condensates thereof with n=1 to 3 is from 5 to 40 mass% with respect to the total amount of the (poly)pentaerythritol mixture. (Note that the total content of pentaerythritol and condensates thereof with n=1 to 3 and pentaerythritol condensates with n≥4 amounts to 100 mass%.) It should be noted that n=1 indicates pentaerythritol, and n=2 indicates dipentaerythritol.

As for the (poly)pentaerythritol mixture, from the viewpoint of flame retardancy, if n represents the degree of condensation of pentaerythritol, a mixture in which the total content of pentaerythritol and condensates thereof with n=1 to 3 is 10 to 30 mass% to the total amount of the mixture is preferred; a mixture in which the content of n=1 pentaerythritol is 0 to 10 mass% and the total content of pentaerythritol and condensates thereof with n=1 to 3 is 5 to 30 mass% is more preferred; and a mixture in which the content of n=1 pentaerythritol is 0 to 5 mass% and the total content of pentaerythritol and condensates thereof with n=1 to 3 is 10 to 30 mass% is most preferred.

An example of the aforementioned pentaerythritol and condensates thereof is a compound represented by the following general formula (5). 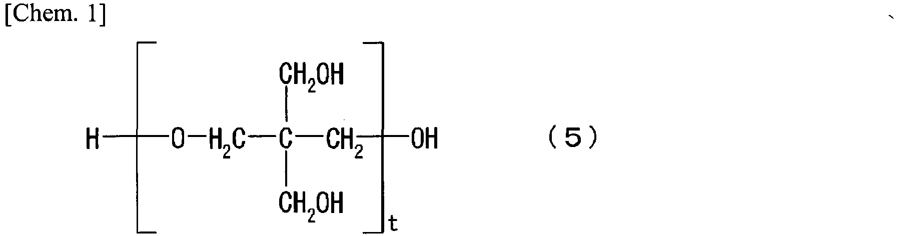 (wherein, t is an integer of 1 or greater.)

The (poly)pentaerythritol mixture may include, for example: compounds resulting from intramolecular etherification within a single pentaerythritol condensate shown in the above general formula (5), compounds resulting from the intermediate methylol group(s) forming ether bond(s) with other molecule(s), compounds that have linked together into a mesh-like form, and large-size compounds formed by further linkage among molecules, forming macrocyclic ether structures in various portions.

The (poly)pentaerythritol mixture can be produced according to known methods without limitation. For example, the mixture can be produced through a thermal dehydrative condensation reaction of pentaerythritol and/or pentaerythritol condensates as they are or in the presence of an appropriate catalyst and solvent.

Examples of catalysts useful for producing the (poly)pentaerythritol mixture include inorganic acids and organic acids that are generally used for the dehydrative condensation reaction of alcohols. Examples of inorganic acids include mineral acids such as phosphoric acid and sulfuric acid; acidic salts of such mineral acids; and solid acid catalysts such as clay minerals (e.g. montmorillonite), silica, alumina, and zeolite. Examples of organic acids include formic acid and para-toluenesulfonic acid.

There is no particular limitation to the amount of catalyst to be used. In cases of using a water-soluble acid catalyst, it will suffice if the amount used can keep the pH of the reaction system during reaction below 7, and preferably equal to or below 5. In cases of using a solid acid catalyst, it will generally suffice if the amount used is 0.1 to 100 mass% with respect to pentaerythritol.

Examples of solvents useful for producing the (poly)pentaerythritol mixture include: hydrocarbons such as benzene, xylene, decalin, and tetralin; ethers such as dioxane, tetrahydrofuran, ethyl ether, anisole, phenyl ether, diglyme, tetraglyme, and 18-crown-6; methyl acetate, ethyl butyrate, and methyl benzoate; ketones such as γ-butyrolactone; N-substituted amides such as N-methylpyrrolidinone, N,N-dimethylacetamide, N-methylpiperidone, and hexamethylphosphoric triamide; tertiary amines such as N,N-diethylaniline, N-methylmorpholine, pyridine, and quinoline; sulfones such as sulfolane; sulfoxides such as dimethylsulfoxide; urea derivatives such as 1,3-dimethyl-2-imidazolidinone; phosphine oxides such as tributylphosphine oxide; and silicone oil. These solvents may be dehydrated or may be hydrous.

The temperature range for the thermal dehydrative condensation reaction in the production of the (poly)pentaerythritol mixture is generally around 100 to 280°C, more preferably 150 to 240°C. Reaction temperatures below 100°C may result in slow reaction, whereas temperatures above 280°C may make the condensation reaction difficult to control.

In cases of blending the aforementioned polyol compound(s) to the flame retardant composition of the present invention, the amount to be blended with respect to 100 parts by mass in total of component (A) and component (B) is preferably from 0.5 to 15 parts by mass, more preferably from 2 to 12 parts by mass, and even more preferably from 5 to 10 parts by mass.

In the flame retardant composition of the present invention, it is possible to use one or more types of non-halogen-containing organic/inorganic flame retardants or flame retardant assistants, if necessary, in amounts that do not impair the effects of the present invention. Examples of such flame retardants/flame retardant assistants include triazine-ring-containing compounds, metal hydroxides, phosphoric-ester-based flame retardants, condensed-phosphoric-ester-based flame retardants, phosphate-based flame retardants, inorganic phosphorus-based flame retardants, dialkylphosphinate salts, silicone-based flame retardants, metal oxides, boric acid compounds, swelling graphite, other inorganic flame retardant assistants, and other organic flame retardants.

Examples of the triazine-ring-containing compounds include melamine, ammeline, benzoguanamine, acetoguanamine, phthalodiguanamine, melamine cyanurate, butylene diguanamine, norbornene diguanamine, methylene diguanamine, ethylene dimelamine, trimethylene dimelamine, tetramethylene dimelamine, hexamethylene dimelamine, and 1,3-hexylene dimelamine.

Examples of the metal hydroxides include magnesium hydroxide, aluminum hydroxide, calcium hydroxide, barium hydroxide, zinc hydroxide, and Kisuma 5A (trade name of magnesium hydroxide; product of Kyowa Chemical Industry Co., Ltd.).

Examples of the phosphoric-ester-based flame retardants include trimethyl phosphate, triethyl phosphate, tributyl phosphate, tributoxyethyl phosphate, trischloroethyl phosphate, trisdichloropropyl phosphate, triphenyl phosphate, tricresyl phosphate, cresyl diphenyl phosphate, trixylenyl phosphate, octyl diphenyl phosphate, xylenyl diphenyl phosphate, trisisopropylphenyl phosphate, 2-ethylhexyl diphenyl phosphate, t-butylphenyl diphenyl phosphate, bis-(t-butylphenyl) phenyl phosphate, tris-(t-butylphenyl) phosphate, isopropylphenyl diphenyl phosphate, bis-(isopropylphenyl) diphenyl phosphate, and tris-(isopropylphenyl) phosphate.

Examples of the condensed-phosphoric-ester-based flame retardants include 1,3-phenylene bis(diphenyl phosphate), 1,3-phenylene bis(dixylenyl phosphate), and bisphenol A, bis(diphenyl phosphate).

An example of the inorganic phosphorus-based flame retardant includes red phosphorus.

Examples of the dialkylphosphinate salts include aluminum diethylphosphinate and zinc diethylphosphinate.

Examples of other inorganic flame retardant assistants include inorganic compounds such as titanium oxide, aluminum oxide, and magnesium oxide, and surface-treated products thereof. As specific examples thereof, it is possible to use various commercially-available products, such as Tipaque R-680 (trade name of titanium oxide; product of Ishihara Sangyo Kaisha, Ltd.) and Kyowa Mag 150 (trade name of magnesium oxide; product of Kyowa Chemical Industry Co., Ltd.).

The flame retardant composition used in the present invention may include, if necessary, a phenol-based antioxidant, a phosphorus-based antioxidant, a thioether-based antioxidant, a UV absorber, a hindered-amine-based light stabilizer, an anti-aging agent, and the like. These components may be blended in advance to the flame retardant composition of the invention, or may be blended to a synthetic resin at the time of blending the flame retardant composition of the invention to the synthetic resin. It is preferable to stabilize the synthetic resin by blending these components.

Examples of the phenol-based antioxidant include 2,6-di-tert-butyl-p-cresol, 2,6-diphenyl-4-octadesiloxyphenol, distearyl(3,5-di-tert-butyl-4-hydroxybenzyl)phosphonate, 1,6-hexamethylene-bis[(3,5-di-tert-butyl-4-hydroxyphenyl)propionic acid amide], 4,4'-thio-bis(6-tert-butyl-m-cresol), 2,2'-methylene-bis(4-methyl-6-tert-butylphenol), 2,2' -methylene-bis(4-ethyl-6-tert-butylphenol), 4,4'-butylidene-bis(6-tert-butyl-m-cresol), 2,2'-ethylidene-bis(4,6-di-tert-butylphenol), 2,2'-ethylidene-bis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl(3,5-di-tert-butyl-4-hydroxyphenyl)propionate, tetrakis[3-(3,5-di-tert-butyl-4-hydroxyphenyl)methylpropionate]methane, thiodiethylene glycol bis[(3,5-di-tert-butyl-4-hydroxyphenyl)propionate], 1,6-hexamethylene-bis[(3,5-di-tert-butyl-4-hydroxyphenyl)propionate], bis[3,3-bis(4-hydroxy-3-tert-butylphenyl)butyric acid] glycol ester, bis[2-tert-butyl-4-methyl-6-(2-hydroxy-3-tert-butyl-5-methylbenzyl)phenyl]terephtha late, 1,3,5-tris[(3,5-di-tert-butyl-4-hydroxyphenyl)propionyloxyethyl] isocyanurate, 3,9-bis[1,1-dimethyl-2- {(3-tert-butyl-4-hydroxy-5-methylphenyl)propionyloxy} ethyl] -2,4,8,10-tetraoxaspiro[5,5]undecane, and triethylene glycol bis[(3-tert-butyl-4-hydroxy-5-methylphenyl)propionate].

The amount of the phenol-based antioxidant(s) used when blended with a synthetic resin is preferably from 0.001 to 5 mass%, more preferably from 0.05 to 3 mass%, in the synthetic resin composition.

Examples of the phosphorus-based antioxidant include trisnonylphenyl phosphite, tris[2-tert-butyl-4-(3-tert-butyl-4-hydroxy-5-methylphenylthio)-5-methylphenyl] phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidene bis(2-tert-butyl-5-methylphenol) diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylene-bis(4,6-tert-butylphenyl)-2-ethylhexyl phosphite, 2,2'-methylene-bis(4,6-tert-butylphenyl)-octadecyl phosphite, 2,2' -ethylidene-bis(4,6-di-tert-butylphenyl)fluorophosphite, tris(2-[(2,4,8,10-tetrakis-tert-butyldibenzo[d,f][1,3,2]dioxaphosphepin-6-yl)oxy]ethyl )amine, and a phosphite of 2-ethyl-2-butylpropylene glycol and 2,4,6-tri-tert-butylphenol. The amount of the phosphorus-based antioxidant(s) used when blended with a synthetic resin is preferably from 0.001 to 5 mass%, more preferably from 0.05 to 3 mass%, in the synthetic resin composition.

Examples of the thioether-based antioxidant include dialkyl thiodipropionates, such as dilauryl thiodipropionate, dimyristyl thiodipropionate, and distearyl thiodipropionate, and pentaerythritol tetra(β-alkyl mercaptopropionates). The amount of the thioether-based antioxidant(s) used when blended with a synthetic resin is preferably from 0.001 to 5 mass%, more preferably from 0.05 to 3 mass%, in the synthetic resin composition.

Examples of the UV absorber include: 2-hydroxybenzophenones such as 2,4-dihydroxybenzophenone, 2-hydroxy-4-methoxybenzophenone, 2-hydroxy-4-octoxybenzophenone, and 5,5'-methylene-bis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2,2'-methylene-bis(4-tert-octyl-6-(benzotriazolyl)phenol), and 2-(2'-hydroxy-3'-tert-butyl-5'-carboxyphenyl)benzotriazole; benzoates such as phenyl salicylate, resorcinol monobenzoate, 2,4-di-tert-butylphenyl-3,5-di-tert-butyl-4-hydroxybenzoate, 2,4-di-tert-amylphenyl-3,5-di-tert-butyl-4-hydroxybenzoate, and hexadecyl-3,5-di-tert-butyl-4-hydroxybenzoate; substituted oxanilides such as 2-ethyl-2'-ethoxyoxanilide and 2-ethoxy-4'-dodecyloxanilide; cyanoacrylates such as ethyl-α-cyano-β,β-diphenylacrylate and methyl-2-cyano-3-methyl-3-(p-methoxyphenyl)acrylate; and triaryltriazines such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-tert-butylphenyl)-s-triazine. The amount of the UV absorber(s) used when blended with a synthetic resin is preferably from 0.001 to 5 mass%, more preferably from 0.05 to 3 mass%, in the synthetic resin composition.

Examples of the hindered-amine-based light stabilizer include hindered-amine compounds such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis(1,2,2,6,6-tetramethyl-4-piperidyl) sebacate, bis(1-octoxy-2,2,6,6-tetramethyl-4-piperidyl) sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, bis(2,2,6,6-tetramethyl-4-piperidyl)·di(tridecyl)-1,2,3,4-butane tetracarboxylate, bis(1,2,2,6,6-pentamethyl-4-piperidyl)·di(tridecyl)-1,2,3,4-butane tetracarboxylate, bis(1,2,2,4,4-pentamethyl-4-piperidyl)-2-butyl-2-(3,5-di-tert-butyl-4-hydroxybenzyl) malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-tri azine polycondensate, 1,6-bis(2,2,6,6-tetramethyl-4-piperidylamino)hexane/2,4-dichloro-6-tert-octylamino-s -triazine polycondensate, 1,5,8,12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(N-butyl-N-(1,2,2,6,6-pentamethyl-4-piperidyl)amino)-s-triaz in-6-yl]-1,5,8,12-tetraazadodecane, 1,6,11-tris[2,4-bis(N-butyl-N-(2,2,6,6-tetramethyl-4-piperidyl)amino)-s-triazin-6-yl]a minoundecane, and 1,6,11-tris[2,4-bis(N-butyl-N-(1,2,2,6,6-pentamethyl-4-piperidyl)amino)-s-triazin-6-y l]aminoundecane. The amount of the hindered-amine-based light stabilizer(s) used when blended with a synthetic resin is preferably from 0.001 to 5 mass%, more preferably from 0.05 to 3 mass%, in the synthetic resin composition.

Examples of the anti-aging agent include naphthylamine-based agents, diphenylamine-based agents, p-phenyldiamine-based agents, quinoline-based agents, hydroquinone derivatives, monophenol-based agents, thiobisphenol-based agents, hindered-phenol-based agents, and phosphite ester-based agents. The amount of the anti-aging agent(s) used when blended with a synthetic resin is preferably from 0.001 to 5 mass%, more preferably from 0.05 to 3 mass%, in the synthetic resin composition.

The flame retardant composition of the present invention may include, as optional components, reinforcement materials in amounts that do not impair the effects of the present invention. These components may be blended to a synthetic resin at the time of blending the flame retardant composition of the invention to the synthetic resin. Fibrous, tabular, granular, or powdery reinforcement materials that are generally used for the reinforcement of synthetic resins may be used as the reinforcement materials. Specific examples include: inorganic fibrous reinforcement materials, such as glass fiber, asbestos fiber, carbon fiber, graphite fiber, metallic fiber, potassium titanate whisker, aluminum borate whisker, magnesium-based whisker, silicon-based whisker, wollastonite, sepiolite, asbestos, slag fiber, Zonolite, ellestadite, gypsum fiber, silica fiber, silica-alumina fiber, zirconia fiber, boron nitride fiber, silicon nitride fiber, and boron fiber; organic fibrous reinforcement materials, such as polyester fiber, nylon fiber, acrylic fiber, regenerated cellulose fiber, acetate fiber, kenaf, ramie, cotton, jute, hemp, sisal, flax, linen, silk, Manila hemp, sugarcane, wood pulp, scrap paper, waste paper, and wool; and tabular/granular reinforcement materials, such as glass flakes, non-swelling mica, graphite, metal foil, ceramic beads, clay, mica, sericite, zeolite, bentonite, dolomite, kaoline, micronized silicate, feldspar powder, potassium titanate, Shirasu balloons, calcium carbonate, magnesium carbonate, barium sulfate, calcium oxide, aluminum oxide, titanium oxide, aluminum silicate, silicon oxide, gypsum, novaculite, dawsonite, and white clay. These reinforcement materials may be coated or bundled with a thermoplastic resin, such as an ethylene/vinyl acetate copolymer, or a thermosetting resin, such as epoxy resin, or may be treated with e.g. a coupling agent, such as aminosilane or epoxy silane.

The flame retardant composition of the present invention may further include, as an optional component, a crystal nucleator in an amount that does not impair the effects of the present invention. Any nucleator generally used as a polymer crystal nucleator may be used as appropriate as the crystal nucleator. In the present invention, both inorganic and organic crystal nucleators may be used. These components may be blended to a synthetic resin at the time of blending the flame retardant composition of the invention to the synthetic resin.

Specific examples of inorganic crystal nucleators include kaolinite, synthetic mica, clay, zeolite, silica, graphite, carbon black, magnesium oxide, titanium oxide, calcium sulfide, boron nitride, calcium carbonate, barium sulfate, aluminum oxide, neodymium oxide, and metal salts of phenylphosphonate etc. These inorganic-based crystal nucleators may be modified by organic substances in order to improve their dispersibility in the composition.

Specific examples of organic crystal nucleators include: organic carboxylate metal salts, such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanoate, calcium octacosanoate, sodium stearate, potassium stearate, lithium stearate, calcium stearate, magnesium stearate, barium stearate, sodium montanate, calcium montanate, toluic acid sodium salt, sodium salicylate, potassium salicylate, zinc salicylate, aluminum dibenzoate, potassium dibenzoate, lithium dibenzoate, sodium β-naphthalate, and sodium cyclohexane carboxylate; organic sulfonate salts, such as sodium p-toluene sulfonate and sodium sulfoisophthalate; carboxylic acid amides, such as stearamide, ethylene-bis-lauric acid amide, palmitic acid amide, hydroxystearamide, erucamide, and trimesic acid tris(t-butylamide); benzylidenesorbitol and derivatives thereof; phosphorus compound metal salts, such as sodium 2,2'-methylene-bis(4,6-di-t-butylphenyl)phosphate; and sodium 2,2-methylbis(4,6-di-t-butylphenyl).

The flame retardant composition of the present invention may include, as an optional component, a plasticizer in an amount that does not impair the effects of the present invention. Any plasticizer generally used as a polymer plasticizer may be used as appropriate as the plasticizer, and examples include polyester-based plasticizers, glycerol-based plasticizers, polycarboxylic acid ester-based plasticizers, polyalkylene glycol-based plasticizers, and epoxy-based plasticizers.

These components may be blended to a synthetic resin at the time of blending the flame retardant composition of the invention to the synthetic resin.

Specific examples of polyester-based plasticizers include: polyesters of an acid component, such as adipic acid, sebacic acid, terephthalic acid, isophthalic acid, naphthalene dicarboxylic acid, diphenyldicarboxylic acid, and rosin, and a diol component, such as propylene glycol, 1,3-butane diol, 1,4-butane diol, 1,6-hexane diol, ethylene glycol, and diethylene glycol; and polyesters consisting of hydroxycarboxylic acids, such as polycaprolactone. The terminals of these polyesters may be blocked by a monofunctional carboxylic acid or a monofunctional alcohol, or may be blocked by an epoxy compound, etc.

Specific examples of the glycerol-based plasticizers include glycerol monoacetomonolaurate, glycerol diacetomonolaurate, glycerol monoacetomonostearate, glycerol diacetomonooleate, and glycerol monoacetomonomontanate. Specific examples of polycarboxylic acid ester-based plasticizers include: phthalate esters, such as dimethyl phthalate, diethyl phthalate, dibutyl phthalate, dioctyl phthalate, diheptyl phthalate, dibenzyl phthalate, and butyl benzyl phthalate; trimellitate esters, such as tributyl trimellitate, trioctyl trimellitate, and trihexyl trimellitate; adipate esters, such as diisodecyl adipate, n-octyl-n-decyl adipate, methyldiglycol butyldiglycol adipate, benzyl methyl diglycol adipate, and benzyl butyl diglycol adipate; citrate esters, such as triethyl acetylcitrate and tributyl acetylcitrate; azelate esters, such as di-2-ethylhexyl azelate; and sebacate esters, such as dibutyl sebacate and di-2-ethylhexyl sebacate.

Specific examples of polyalkylene glycol-based plasticizers include: polyalkylene glycols, such as polyethylene glycol, polypropylene glycol, poly(ethylene oxide-propylene oxide) block and/or random copolymers, polytetramethylene glycol, ethylene oxide addition polymers of bisphenols, propylene oxide addition polymers of bisphenols, tetrahydrofuran addition polymers of bisphenols; and terminal-blocked compounds thereof, such as terminal-epoxy-modified compounds, terminal-ester-modified compounds, and terminal-ether-modified compounds.

An epoxy-based plasticizer generally refers, for example, to an epoxy triglyceride consisting of alkyl epoxy stearate and soybean oil, but so-called epoxy resins--which mainly employ bisphenol A and epichlorohydrin as materials--may be used.

Specific examples of other plasticizers include benzoic acid esters of aliphatic polyols such as neopentyl glycol dibenzoate, diethylene glycol dibenzoate, and triethylene glycol di-2-ethylbutyrate, fatty acid amides such as stearamide, aliphatic carboxylic acid esters such as butyl oleate, oxyacid esters such as methyl acetylricinoleate and butyl acetylricinoleate, pentaerythritol, various sorbitols, polyacrylic esters, and paraffins.

Only one type of plasticizer may be used, or two or more types of plasticizers may be used in combination, in cases of using plasticizer(s) in the present invention.

Further, if necessary, the flame retardant composition of the present invention may include additives--such as cross-linking agents, antistatic agents, metal soaps, fillers, antifogging agents, anti-plate-out agents, surface-treating agents, fluorescers, fungicides, bactericides, foaming agents, metal deactivators, mold-release agents, pigments, processing aids, flowability improvers, thickening agents, thixotropes, and fumed silica--that are generally used for synthetic resins in amounts that do not impair the effects of the present invention.

These components may be blended to a synthetic resin at the time of blending the flame retardant composition of the invention to the synthetic resin.

When the flame retardant composition of the present invention is dispersed in water in an amount that is 9 times the mass of the composition, and is thus made into a slurry-state liquid, it is preferable that the liquid has a pH at 25°C within a range from 3.0 to 5.0, more preferably within a range from 3.5 to 5.0, most preferably within a range from 4.0 to 5.0.

It is not preferable if the pH is below 3.0, because heat resistance may be impaired and the composition may corrode processing machines, and weather resistance may be impaired when the composition is used with a synthetic resin.

The pH range can be adjusted by raising the pH by adding the hydrotalcite compound of component (C).

The flame retardant composition of the present invention is effective in flame-proofing synthetic resins, and is used preferably as a flame-retardant synthetic resin composition by being blended with a synthetic resin.

Specific examples of synthetic resins that are flame-proofed by the flame retardant composition of the present invention include thermoplastic resins, and blends thereof, including: polyolefins and copolymers thereof, e.g., α-olefin polymers, such as polypropylene, high-density polyethylene, low-density polyethylene, linear low-density polyethylene, cross-linked polyethylene, ultra-high-molecular-weight polyethylene, polybutene-1, and poly-3-methylpentene, ethylene-vinyl acetate copolymer, ethylene-ethyl acrylate copolymer, and ethylene-propylene copolymer; halogen-containing resins, such as polyvinyl chloride, polyvinylidene chloride, chlorinated polyethylene, chlorinated polypropylene, polyvinylidene fluoride, chlorinated rubber, vinyl chloride-vinyl acetate copolymer, vinyl chloride-ethylene copolymer, vinyl chloride-vinylidene chloride copolymer, vinyl chloride-vinylidene chloride-vinyl acetate terpolymer, vinyl chloride-acrylic ester copolymer, vinyl chloride-maleic ester copolymer, and vinyl chloride-cyclohexyl maleimide copolymer; petroleum resin; coumarone resin; polystyrene; polyvinyl acetate; acrylic resin; copolymers of styrene and/or α-methyl styrene with other monomers (e.g., maleic anhydride, phenyl maleimide, methyl methacrylate, butadiene, acrylonitrile, etc.) (e.g., AS resin, ABS resin, ACS resin, MBS resin, SBS resin, heat-resistant ABS resin, etc.); polymethyl methacrylate; polyvinyl alcohol; polyvinyl formal; polyvinyl butyral; linear polyesters, e.g., polyalkylene terephthalates such as polyethylene terephthalate, polybutylene terephthalate, and polycyclohexane dimethylene terephthalate, aromatic polyesters e.g. polyalkylene naphthalates such as polyethylene naphthalate and polybutylene naphthalate, and polytetramethylene terephthalate; degradable aliphatic polyesters, such as polyhydroxybutyrate, polycaprolactone, polybutylene succinate, polyethylene succinate, polylactic resin, polymalic acid, polyglycolic acid, polydioxane, and poly(2-oxetanone); polyphenylene oxide; polyamides such as polycaprolactam and polyhexamethylene adipamide; polycarbonate; branched polycarbonate; polyacetal; polyphenylene sulfide; polyurethane; and cellulose-based resin. Other examples include: thermosetting resins, such as phenolic resin, urea resin, melamine resin, epoxy resin, and unsaturated polyester resin; fluorine-based resin; silicone resin; silicone rubber polyether sulfone; polysulfone; polyphenylene ether; polyether ketone; polyether ether ketone; and liquid crystal polymers. Further, other examples include elastomers, such as isoprene rubber, butadiene rubber, acrylonitrile-butadiene copolymer rubber, styrene-butadiene copolymer rubber, fluorine rubber, silicone rubber, olefin-based elastomers, styrene-based elastomers, polyester-based elastomers, nitrile-based elastomers, nylon-based elastomers, vinyl chloride-based elastomers, polyamide-based elastomers, and polyurethane-based elastomers.

Two or more types of these synthetic resins may be used, or the synthetic resins may alloyed.

Any type of synthetic resin may be used in the present invention, regardless of factors such as molecular weight, degree of polymerization, density, softening point, the proportion of portions insoluble to a solvent, the degree of three-dimensional regularity, presence/absence of catalyst residue, types and content ratio of the starting materials such as the monomer etc., and types of polymerization catalysts (e.g., Ziegler catalyst, metallocene catalyst, etc.).

Among the aforementioned synthetic resins, polyolefin-based resins are particularly preferable. Examples of polyolefin-based resins include: α-olefin polymers, such as low-density polyethylene, linear low-density polyethylene, high-density polyethylene, isotactic polypropylene, syndiotactic polypropylene, hemiisotactic polypropylene, polybutene, cycloolefin polymer, stereoblock polypropylene, poly-3-methyl-1-butene, poly-3-methyl-1-pentene, and poly-4-methyl-1-pentene; and α-olefin copolymers, such as ethylene/propylene block or random copolymer, ethylene-methyl methacrylate copolymer, and ethylene-vinyl acetate copolymer.

The flame-retardant synthetic resin composition of the present invention includes preferably from 3 to 100 parts by mass--more preferably from 10 to 90 parts by mass, even more preferably from 20 to 80 parts by mass--of the flame retardant composition of the present invention with respect to 100 parts by mass of the aforementioned synthetic resin(s).

A shaped product having excellent flame retardancy can be produced by shaping the flame-retardant synthetic resin composition of the present invention. There is no particular limitation to the methods for shaping, and examples thereof include extrusion, calendering, injection molding, rolling, compression molding, and blow molding. Various shaped products having a variety of shapes can be manufactured, such as resin plates, sheets, films, and odd-form components.

The resin composition can be used, for example, for: housings (frames, casings, covers, exterior materials) and components of electric vehicles, machines, electrical/electronic equipment, and office-automation equipment; and automotive interior/exterior materials.

The flame-retardant synthetic resin composition and the shaped product according to the present invention can be used in a wide variety of industries, such as electricity, electronics, telecommunications, agriculture, forestry, fisheries, mining, construction, foods, textiles, clothing, medical products/services, coal, oil, rubber, leather, automobiles, precision instruments, lumber, construction materials, civil engineering, furniture, printing, and musical instruments. More specifically, the present invention can be used for: office supplies and office-automation equipment such as printers, personal computers, word processors, keyboards, PDAs (or compact information terminals), telephones, copying machines, facsimile machines, ECRs (electronic cash registers), calculators, electronic organizers, cards, holders, and stationery; home electrical appliances such as washing machines, refrigerators, vacuum cleaners, microwave ovens, lighting fixtures, game machines, irons, and foot warmers; audio-visual equipment such as TVs, videocassette recorders, video cameras, radio-cassette recorders, tape recorders, mini discs, CD players, loudspeakers, and liquid crystal displays; electrical/electronic components and telecommunications equipment such as connectors, relays, capacitors, switches, printed-circuit boards, coil bobbins, sealing materials for semiconductors, sealing materials for LEDs, electrical wires, cables, transformers, deflection yokes, distribution switchboards, and clocks; housings (frames, casings, covers, exterior materials) and components of office-automation equipment, etc.; and automotive interior/exterior materials.

Furthermore, the flame-retardant synthetic resin composition and the shaped product according to the present invention can be used in various applications such as: materials for automobiles, hybrid cars, electric cars, vehicles, ships, airplanes, architecture, houses, and buildings, such as seats (stuffing, outer cloth, etc.), belts, ceiling cladding, convertible tops, armrests, door trims, rear package trays, carpets, mats, sun visors, wheel covers, mattress covers, airbags, insulators, straps, strap belts, wire coverings, electrical insulators, paint, coating materials, overlay materials, floor materials, corner walls, carpets, wallpapers, wall cladding, exterior cladding, interior cladding, roof materials, deck materials, wall materials, pillar materials, decking, fence materials, framework, molding, windows, door-shape materials, shingles, panel boards, terraces, balconies, acoustical insulation boards, heat-insulating boards, and window materials; civil engineering materials; and everyday commodities and sporting goods, such as clothing, curtains, bed linen, plywood, synthetic fiber boards, rugs, doormats, sheets, buckets, hoses, containers, eyeglasses, bags, cases, goggles, skis, rackets, tents, and musical instruments.

### Examples

The present invention is described in further detail below according to Examples. The present invention, however, is not limited whatsoever by the following Examples.

### {Examples 1 to 6 and Comparative Examples 1 to 4}

Component (A) and component (B) were produced according to the following methods.

### {Production Example 1}

### Component (A): Melamine Salt

Melamine orthophosphate was subjected to heating condensation reaction at 220°C for 6 hours in a solid-phase state, to produce a melamine salt including melamine pyrophosphate as the main component. The melamine salt was used as-is without refining. The purity of melamine pyrophosphate in the melamine salt was 98.5%.

The purity was measured by using a HPLC device (pump: SSC-3150; RI detector: ERC-7515A) from Senshu Scientific Co., Ltd., a column oven (CO-965) from JASCO Corporation, and an OHpak column (SB-802.5 HQ) from Shodex.

### {Production Example 2}

### Component (B): Piperazine Salt

Piperazine orthophosphate was subjected to heating condensation reaction at 250°C for 1 hour in a solid-phase state, to produce a piperazine salt including piperazine pyrophosphate as the main component. The piperazine salt was used as-is without refining. The purity of piperazine pyrophosphate in the piperazine salt was 99.0%.

The purity was measured by using a HPLC device (pump: SSC-3150; RI detector: ERC-7515A) from Senshu Scientific Co., Ltd., a column oven (CO-965) from JASCO Corporation, and an OHpak column (SB-802.5 HQ) from Shodex.

Next, according to each formulation shown in Table 1, flame retardant compositions according to respective Examples were prepared. Likewise, according to each formulation shown in Table 1, flame retardant compositions according to respective Comparative Examples were prepared.

The pH of each obtained flame retardant composition was measured according to the following measurement method. The results are shown in Table 1.

A corrosion test of each obtained flame retardant composition was conducted according to the following corrosion test method. The results are shown in Table 1.

A heat resistance test of each obtained flame retardant composition was conducted according to the following heat resistance test method. The results are shown in Table 1.

### {PH Measurement Method}

To 36 g of water in a 100-ml beaker, 4 g of the flame retardant composition was added. The beaker was subjected to ultrasonic vibration at room temperature for 30 minutes, to obtain a slurry-state liquid including 10 mass% of the flame retardant composition. The pH of the obtained slurry-state liquid at 25°C was measured with a pH meter (LAQUA F-72 from Horiba, Ltd.). This operation was performed three times, and the average value was taken as the flame retardant composition's pH.

### {Corrosion Test Method}

In a 100-ml-capacity glass test tube was placed 10 g of the flame retardant composition. A 10-mm-dia. brass test rod was placed in the test tube such that the bottom half of the test rod was immersed in the flame retardant composition. The test tube was placed in a 200°C block bath in air and was heated. After 400 hours, the surface state of the portion of the brass test rod that was immersed in the flame retardant composition was visually checked, and was evaluated as follows.
Poor: Blackening of test rod surface due to corrosion.
Satisfactory: Slight change in color on test rod surface.
Good: Almost no change on test rod surface.

### {Heat Resistance Test Method}

The temperature was raised from 30°C to 310°C at a temperature-rise rate of 10°C/minute under an air flow of 200 ml/minute by using a thermogravimetric differential thermal analysis device Thermo plus EVO (product from Rigaku Co., Ltd.), to measure the 1% weight-loss temperature.

### {Examples 7 to 12 and Comparative Examples 5 to 8}

A polypropylene resin composition was obtained by blending, to 70 parts by mass of polypropylene (melt flow rate: 8 g/10 min), 0.1 parts by mass of calcium stearate (slip additive), 0.1 parts by mass of tetrakis[3-(3,5-di-tert-butyl-4-hydroxyphenyl)methylpropionate]methane (phenol-based antioxidant), 0.1 parts by mass of tris(2,4-di-tert-butylphenyl) phosphite (phosphorus-based antioxidant), and 0.3 parts by mass of glycerol monostearate (slip additive). To the obtained polypropylene resin composition, the respective flame retardant compositions obtained according to Examples 1 to 6 were added according to the proportion (mass%) shown in Table 2, to obtain respective flame-retardant synthetic resin compositions according to Examples 7 to 12. Note that, as regards the flame retardant compositions used, the flame retardant composition obtained according to Example 1 is indicated as Flame retardant composition 1, the flame retardant composition obtained according to Example 2 is indicated as Flame retardant composition 2, and the same applies up to Flame retardant composition 6.

Likewise, the flame retardant composition obtained according to Comparative Example 1 is indicated as Comparative flame retardant composition 1, the flame retardant composition obtained according to Comparative Example 2 is indicated as Comparative flame retardant composition 2, and the same applies up to Comparative flame retardant composition 4. The respective Comparative flame retardant compositions were used according to the formulation shown in Table 2, to obtain respective flame-retardant synthetic resin compositions according to Comparative Examples 5 to 8.

Each of the flame-retardant synthetic resin compositions obtained according to respective Examples 7 to 12 was extruded at a temperature from 200 to 230°C and made into pellets, and the pellets were used for injection molding at 200°C, into a 127-mm-long, 12.7-mm-wide, 1.6-mm-thick test piece. A flame retardancy test was performed by using each test piece, in which a UL-94V test was performed according to the following test method. The results are shown in Table 2. Likewise, the respective flame-retardant synthetic resin compositions of Comparative Examples 5 to 8 were each subjected to the UL-94V test. The results are shown in Table 2.

Further, the respective flame-retardant synthetic resin compositions obtained by Examples 7 to 12 were each subjected to a weather resistance test according to the following test method. The results are shown in Table 2.

Likewise, the respective flame-retardant synthetic resin compositions obtained by Comparative Examples 5 to 8 were each subjected to the weather resistance test. The results are shown in Table 2.

### {UL-94V Flame Retardancy Test}

The 127-mm-long, 12.7-mm-wide, 1.6-mm-thick test piece was held vertically, a burner flame was placed in contact with the lower end of the test piece for 10 seconds and then the flame was removed, and the time it took for the fire that caught on the test piece to cease was measured. Then, at the same time as the cessation of the burning, a burner flame was placed in contact with the test piece for 10 seconds for the second time, and the time it took for the fire that caught on the test piece to cease was measured, like the first time. At the same time, evaluation was made as to whether or not flaming particles that dropped from the test piece ignite a piece of cotton located below the test piece.

From the first and second combustion times and whether or not the cotton piece ignited, each test piece was ranked according to the UL-94V standard. The combustion rank V-0 is the highest rank, and flame retardancy decreases in the order of V-1 to V-2. Note that test pieces that do not fall under any of the ranks V-0 to V-2 are indicated as NR.

### {Weather Resistance Test Method}

The yellowness index (Y.I.) of each of the aforementioned test pieces was measured at 240 hours and 360 hours by using a Sunshine Weather Meter (product from Suga Test Instruments Co., Ltd.) under the following conditions: 63°C, with rainfall. A color difference meter TC-8600A (product from Tokyo Denshoku Co., Ltd.) was used for measuring the yellowness index.

**[Table 1]**

| Formulation | Example | | | | | | Comparative Example | | | |
|---|---|---|---|---|---|---|---|---|---|---|
| | 1 | 2 | 3 | 4 | 5 | 6 | 1 | 2 | 3 | 4 |
| Component (A): Melamine salt | 40 | 40 | 40 | 30 | 20 | 50 | 40 | 30 | 20 | 50 |
| Component (B): Piperazine salt | 60 | 60 | 60 | 70 | 80 | 50 | 60 | 70 | 80 | 50 |
| Component (C): Hydrotalcite ^{*1} | 0.4 | 0.2 | 0.8 | 0.4 | 0.4 | 0.4 | | | | |
| pH | 4.1 | 4.0 | 4.3 | 4.3 | 4.5 | 4.0 | 3.5 | 3.6 | 3.8 | 3.4 |
| Corrosion test | Good | Good | Good | Good | Good | Good | Poor | Poor | Poor | Poor |
| 1% weight-loss temperature (°C) | 281 | 278 | 282 | 280 | 286 | 278 | 272 | 278 | 285 | 270 |

| | | | | | | | | | | |
|---|---|---|---|---|---|---|---|---|---|---|
| *1: DHT-4A (product of Kyowa Chemical Industry Co., Ltd.) | | | | | | | | | | |

**[Table 2]**

| Formulation | | Example | | | | | | Comparative Example | | | |
|---|---|---|---|---|---|---|---|---|---|---|---|
| | | 7 | 8 | 9 | 10 | 11 | 12 | 5 | 6 | 7 | 8 |
| Flame retardant composition 1 | | 30 | | | | | | | | | |
| Flame retardant composition 2 | | | 30 | | | | | | | | |
| Flame retardant composition 3 | | | | 30 | | | | | | | |
| Flame retardant composition 4 | | | | | 30 | | | | | | |
| Flame retardant composition 5 | | | | | | 30 | | | | | |
| Flame retardant composition 6 | | | | | | | 35 | | | | |
| Comparative flame retardant composition 1 | | | | | | | | 30 | | | |
| Comparative flame retardant composition 2 | | | | | | | | | 30 | | |
| Comparative flame retardant composition 3 | | | | | | | | | | 30 | |
| Comparative flame retardant composition 4 | | | | | | | | | | | 35 |
| Flame retardancy test UL-94V (1.6 mm) | | V-0 | V-0 | V-0 | V-0 | V-0 | V-0 | V-0 | V-0 | V-0 | V-0 |
| Weather resistance test (Y.I.) | 240 hours | 3.8 | 4.2 | 2.1 | 3.1 | 2.5 | 3.8 | 11.9 | 10.2 | 9.5 | 13.5 |
| | 360 hours | 5.5 | 5.7 | 3.2 | 4.7 | 4.1 | 5.7 | 13.6 | 12.5 | 11.3 | 16.2 |

## Claims

1. A method of preparing a flame-retardant synthetic resin composition, comprising the steps:
(i) preparing a flame retardant composition comprising 20 to 50 parts by mass of component (A) described below, 50 to 80 parts by mass of component (B) described below (the total of the component (A) and the component (B) is 100 parts by mass), and 0.01 to 5 parts by mass of component (C) described below:
component (A): at least one type of melamine salt selected from melamine orthophosphate, melamine pyrophosphate, melamine polyphosphate, or a mixture including two or more types of the melamine salts;
component (B): at least one type of piperazine salt selected from piperazine orthophosphate, piperazine pyrophosphate, piperazine polyphosphate, or a mixture including two or more types of the piperazine salts; and
component (C): a hydrotalcite compound; and
(ii) blending the flame retardant composition of step (i) to a synthetic resin.

2. The method of claim 1, wherein in step (i):
at least one type of the melamine salt selected as the component (A) is a melamine salt obtained by subjecting melamine orthophosphate to heating and condensation; and
at least one type of the piperazine salt selected as the component (B) is a piperazine salt obtained by subjecting piperazine orthophosphate to heating and condensation.

3. The method of claim 1 or 2, wherein a liquid obtained by dispersing the flame retardant composition of step (i) in water in an amount that is 9 times the mass of the composition has a pH within a range from 3.0 to 5.0 at 25°C.

4. The method of any one of claims 1 to 3, wherein the synthetic resin in step (ii) is a polyolefin-based resin.

## Patentansprüche

1. Verfahren zur Herstellung einer flammhemmenden synthetischen Harzzusammensetzung, umfassend die Schritte:
(i) Herstellen einer flammhemmenden Zusammensetzung, umfassend 20 bis 50 Massenteile der nachstehend beschriebenen Komponente (A), 50 bis 80 Massenteile der nachstehend beschriebenen Komponente (B) (die Summe der Komponente (A) und der Komponente (B) beträgt 100 Massenteile) und 0,01 bis 5 Massenteile der nachstehend beschriebenen Komponente (C):
Komponente (A): mindestens eine Art von Melaminsalz, ausgewählt aus Melaminorthophosphat, Melaminpyrophosphat, Melaminpolyphosphat oder einer Mischung, die zwei oder mehr Arten der Melaminsalze enthält;
Komponente (B): mindestens eine Art Piperazinsalz, ausgewählt aus Piperazinorthophosphat, Piperazinpyrophosphat, Piperazinpolyphosphat oder einer Mischung, die zwei oder mehr Arten der Piperazinsalze enthält; und
Komponente (C): eine Hydrotalcitverbindung; und
(ii) Mischen der flammhemmenden Zusammensetzung von Schritt (i) mit einem synthetischen Harz.

2. Verfahren nach Anspruch 1, wobei in Schritt (i):
mindestens eine Art des als Komponente (A) ausgewählten Melaminsalzes ein Melaminsalz ist, das erhalten wird, indem Melaminorthophosphat erhitzt und kondensiert wird; und
mindestens eine Art des als Komponente (B) ausgewählten Piperazinsalzes ein Piperazinsalz ist, das durch Erhitzen und Kondensieren von Piperazinorthophosphat erhalten wird.

3. Verfahren nach Anspruch 1 oder 2, wobei eine Flüssigkeit, die durch Dispergieren der flammhemmenden Zusammensetzung von Schritt (i) in Wasser in einer Menge, die das 9-fache der Masse der Zusammensetzung beträgt, erhalten wird, einen pH-Wert in einem Bereich von 3,0 bis 5,0 bei 25°C aufweist.

4. Verfahren nach einem der Ansprüche 1 bis 3, wobei das synthetische Harz in Schritt (ii) ein Harz auf Polyolefinbasis ist.

## Revendications

1. Procédé de préparation d'une composition de résine synthétique ignifuge, comprenant les étapes suivantes:
(i) préparer une composition ignifuge comprenant 20 à 50 parties en masse du composant (A) décrit ci-dessous, 50 à 80 parties en masse du composant (B) décrite ci-dessous (la totalité du composant (A) et du composant (B ) représente 100 parties en masse) et 0,01 à 5 parties en masse du composant (C) décrit ci-dessous:
composant (A): au moins un type de sel de mélamine choisi parmi l'orthophosphate de mélamine, le pyrophosphate de mélamine, le polyphosphate de mélamine ou un mélange comprenant deux types ou plus de sels de mélamine;
composant (B): au moins un type de sel de pipérazine choisi parmi l'orthophosphate de pipérazine, le pyrophosphate de pipérazine, le polyphosphate de pipérazine, ou un mélange comprenant deux types ou plus de sels de pipérazine; et
composant (C): un composé hydrotalcite; et
(ii) mélanger la composition ignifuge de l'étape (i) à une résine synthétique.

2. Procédé selon la revendication 1, dans lequel à l'étape (i):
au moins un type du sel de mélamine choisi comme composant (A) est un sel de mélamine obtenu en soumettant de l'orthophosphate de mélamine à un chauffage et à une condensation; et
au moins un type du sel de pipérazine choisi comme composant (B) est un sel de pipérazine obtenu en soumettant de l'orthophosphate de pipérazine à un chauffage et à une condensation.

3. Procédé selon la revendication 1 ou 2, dans lequel un liquide, obtenu en dispersant la composition ignifuge de l'étape (i) dans de l'eau en une quantité correspondant à 9 fois la masse de la composition, a un pH de 3,0 à 5,0 à 25 °C.

4. Procédé selon l'une quelconque des revendications 1 à 3, dans lequel la résine synthétique à l'étape (ii) est une résine à base de polyoléfine.
